# EUROPEAN PATENT SPECIFICATION

(11) **EP 4 362 506 B1**
(45) Date of publication and mention of the grant of the patent: **09.09.2026**
(21) Application number: 22845295.9
(22) Date of filing: 19.07.2022
(51) Int. Cl.: H04L 12/18

(54) **COMMUNICATION METHOD AND APPARATUS**
KOMMUNIKATIONSVERFAHREN UND -VORRICHTUNG
PROCÉDÉ ET APPAREIL DE COMMUNICATION

(30) Priority: 23.07.2021 CN 202110839386
(43) Date of publication of application: 01.05.2024
(60) Divisional application: 26189080.0
(73) Proprietor: Huawei Technologies Co., Ltd., Shenzhen, Guangdong 518129 (CN)
(72) Inventor: HE, Qingchun, Shenzhen, Guangdong 518129 (CN); CHENG, Xingqing, Shenzhen, Guangdong 518129 (CN); GAO, Lei, Shenzhen, Guangdong 518129 (CN)
(74) Representative: Körber, Martin Hans
(86) International application number: PCT/CN2022/106397
(87) International publication number: WO 2023/001130

(56) References cited:
- WO-A1-2011/009378
- CN-A- 1 750 465
- CN-A- 101 227 637
- CN-A- 109 155 738
- US-A1- 2010 229 072
- US-A1- 2017 332 245
- US-A1- 2021 036 806
- ASUSTEK: "Clarification on MBMS Radio Bearer Release", 3GPP DRAFT; R2-061117 CLARIFICATION ON MBMS RADIO BEARER RELEASE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. Shanghai, China; 20060503, 3 May 2006 (2006-05-03), Mobile Competence Centre ; 650, route des Lucioles ; F-06921 Sophia-Antipolis Cedex ; France , XP050131074

## Description

### TECHNICAL FIELD

This application relates to the communication field, and more specifically, to a communication method and apparatus.

### BACKGROUND

By using a wireless short-range communication technology, a sending node sends data through a multicast physical channel within a preset time period. Each receiving node in a group receives the multicast physical channel within the preset time period, to receive the data sent by the sending node. The sending node may transmit the data to a plurality of receiving nodes by only one time of data sending. This reduces a quantity of times of data sending, and reduces power consumption of the sending node.

In the preset time period, the receiving node continuously receives the multicast physical channel, and power consumption is high.

US 2021/036806 A1 discloses an intelligent controller and a sensor network bus, a system and a method including an error avoidance and correction mechanism.

### SUMMARY

This application provides a communication method and apparatus, to reduce power consumption of a receiving node.

The invention is defined in the independent claims. Additional features of the invention are provided in the dependent claims. In the following, parts of the description and drawings referring to embodiments which are not covered by the claims are not presented as embodiments of the invention, but as examples useful for understanding the invention.

According to a first aspect, a communication method is provided, including: A first device receives, through a multicast physical channel, a first multicast frame sent by a second device, where the first multicast frame includes first information; and when the first information indicates that the first multicast frame is the last multicast frame sent by the second device within a preset time period, the first device stops receiving the multicast physical channel within the preset time period.

The first device may determine, based on the first information in the received first multicast frame, whether the first multicast frame is the last to-be-sent multicast frame of the second device within the preset time period. If the first multicast frame is the last data frame, the first device stops receiving the multicast physical channel, thereby reducing power consumption of the first device.

With reference to the first aspect, in some possible implementations, the first information is located in a physical layer frame header of the first multicast frame; and the method further includes: A physical layer of the first device parses the physical layer frame header of the first multicast frame, to determine the first information.

The first information may be located in the physical layer frame header of the first multicast frame, and the physical layer of the first device may parse the physical layer frame header to determine the first information.

With reference to the first aspect, in some possible implementations, the first information is located in a payload header of a physical layer of the first multicast frame; and the method further includes: A preset layer of the first device parses the payload header, to determine the first information, where the preset layer is a higher layer relative to the physical layer.

The first information may be located in the payload header of the physical layer of the first multicast frame, and the higher layer of the physical layer of the first device may parse the payload header of the physical layer, to determine the first information.

With reference to the first aspect, in some possible implementations, the method further includes: The first device checks the first multicast frame. That the first device stops receiving the multicast physical channel within the preset time period includes: When a result of the check indicates that the first multicast frame is correct, the first device stops receiving the multicast physical channel within the preset time period. The method further includes: When a result of the check indicates that the first multicast frame is incorrect, retransmission indication information is sent to the second device, where the retransmission indication information indicates the sending node to resend the first multicast frame.

The first device may check the first multicast frame. When the check succeeds, the first device may stop receiving the multicast physical channel. When the check fails, the first device may request retransmission, and continue to receive the multicast physical channel. Therefore, this can ensure correct data receiving while reducing power consumption of the first device.

With reference to the first aspect, in a possible implementation, the first multicast frame includes second information, and the second information indicates that a multicast frame is stored in a retransmission storage area of the second device.

If the sending node no longer retransmits the first multicast frame, the second information indicates that no multicast frame is stored in a retransmission storage area of the sending node.

If the sending node can retransmit the first multicast frame, the second information indicates that a multicast frame is stored in a retransmission storage area of the sending node. When the second information indicates that a multicast frame is stored in the retransmission storage area, the sending node determines, based on a received result of checking the multicast frame by the receiving node, whether to continue retransmission. In other words, when the second information indicates that a multicast frame is stored in the retransmission storage area, the sending node retransmits the first multicast frame when receiving the retransmission indication information sent by the receiving node.

The sending node may flexibly adjust whether to continue to retransmit each multicast frame.

It should be understood that a storage area may be a buffer.

With reference to the first aspect, in some possible implementations, the first information is determined based on a storage status of a new transmission storage area after the second device reads a first data unit from the new transmission storage area and removes the first data unit from the new transmission storage area, and when no data unit is stored in the new transmission storage area from which the first data unit is removed, the first information indicates that the first multicast frame is the last multicast frame sent by the second device within the preset time period.

The second device may determine, based on whether a data unit is stored in the new transmission storage area, whether the first multicast frame is the last multicast frame, so that the second device determines the last multicast frame conveniently.

According to a second aspect, a communication method is provided, including: A first device receives, through a multicast physical channel, a first multicast frame sent by a second device. The first device performs bit descrambling on the first multicast frame by using a first preset scrambling code, to obtain a second multicast frame, where the first preset scrambling code is a scrambling code used by the second device to perform bit scrambling on the last multicast frame sent within a preset time period. The first device performs a first check on the second multicast frame. When the first check succeeds, the first device stops receiving the multicast physical channel within the preset time period.

When the first preset scrambling code is the scrambling code used by the second device to perform bit scrambling on the last to-be-sent multicast frame within the preset time period, the first device performs bit scrambling on the first multicast frame by using the first preset scrambling code, and the second device performs bit descrambling on bit-scrambled first multicast frame by using the first preset scrambling code. The first device may check a second multicast frame obtained through bit descrambling. When the check succeeds, it may be determined that a scrambling code used by the first device is the same as a scrambling code used by the second device, to determine that the first multicast frame is the last multicast frame, so that the first device may stop receiving a multicast physical channel. This reduces power consumption of the first device.

With reference to the second aspect, in some possible implementations, that the first device performs bit descrambling on the first multicast frame by using a first preset scrambling code includes: The first device performs bit descrambling on a check code in the first multicast frame by using the first preset scrambling code, to obtain the second multicast frame.

The second device performs bit scrambling on the check code, and the first device performs bit descrambling on the check code, so that a calculation amount can be reduced, and implementation is simple.

With reference to the second aspect, in some possible implementations, the check code is located in a physical layer frame header of the first multicast frame or a payload header of a physical layer of the first multicast frame.

Bit descrambling is performed only on the check code in the physical layer frame header or the payload header of the physical layer, and implementation is simple.

With reference to the second aspect, in some possible implementations, the method further includes: The first device performs bit descrambling on the first multicast frame by using a second preset scrambling code, to obtain a third multicast frame, where the second preset scrambling code is a scrambling code used by the second device to perform bit scrambling on a multicast frame other than the last multicast frame sent within the preset time period, and the second preset scrambling code is different from the first preset scrambling code. The first device performs a second check on the third multicast frame; and when both the first check and the second check fail, sends retransmission indication information to the sending node, where the retransmission indication information indicates the sending node to resend the first data unit.

The first device checks, by using the first preset scrambling code and the second preset scrambling code, the first multicast frame obtained after bit descrambling is performed on the first multicast frame. The first preset scrambling code and the second preset scrambling code are scrambling codes separately used by the second device in two cases of whether the first multicast frame is the last multicast frame. When both check results are incorrect, receiving of the first multicast frame by the first device is incorrect, and the first device may request retransmission. Therefore, the first device can ensure correct data receiving while reducing power consumption, thereby improving reliability.

According to a third aspect, a communication method is provided, including: A second device generates a first multicast frame, where the first multicast frame includes first information, and the first information indicates whether the first multicast frame is the last multicast frame sent by the second device within a preset time period. The second device sends the first multicast frame to at least one first device through a multicast physical channel.

With reference to the third aspect, in some possible manners, the first information is located in a physical layer frame header of the first multicast frame. That a second device generates a first multicast frame includes: A physical layer of the second device generates the physical layer frame header.

With reference to the third aspect, in some possible manners, the first information is located in a payload header of a physical layer of the first multicast frame. That a second device generates a first multicast frame includes: A preset layer of the second device generates the payload header, where the preset layer is a higher layer relative to the physical layer.

With reference to the third aspect, in some possible manners, the method further includes: The second device receives retransmission indication information sent by the first device, where the retransmission indication information is sent when a check on the first multicast frame by the first device fails. The second device resends the first multicast frame based on the retransmission indication information through the multicast physical channel.

With reference to the third aspect, in some possible manners, the first multicast frame includes second information, and the second information indicates that a multicast frame is stored in a retransmission storage area of the second device. That the second device resends the first multicast frame based on the second information through the multicast physical channel includes: The second device reads the first multicast frame from the retransmission storage area based on the second information. The second device resends the first multicast frame through the multicast physical channel.

With reference to the third aspect, in some possible manners, that a second device generates a first multicast frame includes: The second device reads a first data unit from a new transmission storage area, and removes the first data unit from the new transmission storage area. The second device generates the first multicast frame based on the first data unit and the first information, where when no data unit is stored in the new transmission storage area from which the first data unit is removed, the first information indicates that the first multicast frame is the last multicast frame sent by the second device within the preset time period.

According to a fourth aspect, a communication method is provided, where the method includes: A second device generates a first multicast frame, where the first multicast frame includes a check code. The second device performs bit scrambling on the first multicast frame by using a first preset scrambling code when the first multicast frame is the last to-be-sent multicast frame within a preset time period. The second device sends bit-scrambled first multicast frame to at least one first device through a multicast physical channel.

With reference to the fourth aspect, in some possible manners, that the second device performs bit scrambling on the first multicast frame by using a first preset scrambling code when the first multicast frame is the last to-be-sent multicast frame within a preset time period includes: When the first multicast frame is the last to-be-sent multicast frame within the preset time period, the second device performs bit scrambling on the check code by using the first preset scrambling code.

With reference to the fourth aspect, in some possible manners, the check code is located in a physical layer frame header of the first multicast frame or a payload header of a physical layer of the first multicast frame.

With reference to the fourth aspect, in some possible manners, when the first multicast frame is not the last to-be-sent multicast frame within the preset time period, the second device performs bit scrambling on the first multicast frame by using a first preset scrambling code, where the second preset scrambling code is different from the first preset scrambling code; and receives retransmission indication information sent by the first device, where the retransmission indication information is sent by the first device when both a first check and a second check fail, the first check is a check performed on a second multicast frame, the second check is a check performed on a third multicast frame, the second multicast frame is obtained by the first device by performing bit descrambling on bit-scrambled first multicast frame by using the first preset scrambling code, and the third multicast frame is obtained by the first device by performing bit descrambling on the bit-scrambled first multicast frame by using the second preset scrambling code.

According to a fifth aspect, a communication device is provided, including modules configured to perform the method according to any one of the first aspect to the fourth aspect.

According to a sixth aspect, a communication device is provided, including a processor and a communication interface, where the communication interface is used by the communication device to perform information exchange with another communication device, and when program instructions are executed in at least one processor, the communication device is enabled to perform the method according to any one of the first aspect to the fourth aspect.

According to a seventh aspect, a communication system is provided, including a first communication device and a second communication device, where the first communication device is configured to perform the method according to the first aspect, and the second communication device is configured to perform the method according to the third aspect.

According to an eighth aspect, a communication system is provided, including a first communication device and a second communication device, where the first communication device is configured to perform the method according to the second aspect, and the second communication device is configured to perform the method according to the fourth aspect.

According to a ninth aspect, a computer-readable medium is provided. The computer-readable medium stores program code to be executed by a device, and the program code is used to perform the method according to any one of the first aspect to the fourth aspect.

According to a tenth aspect, a computer program product including instructions is provided. When the computer program product runs on a computer, the computer is enabled to perform the method according to any one of the first aspect to the fourth aspect.

According to an eleventh aspect, a chip is provided, where the chip includes a processor and a data interface, and the processor reads, through the data interface, instructions stored in a memory, to perform the method according to any one of the first aspect to the fourth aspect.

Optionally, in an implementation, the chip may further include the memory, and the memory stores the instructions. The processor is configured to execute the instructions stored in the memory, and when the instructions are executed, the processor is configured to perform the method in any one of the implementations of the first aspect or the second aspect.

The chip may be specifically a field-programmable gate array (field-programmable gate array, FPGA) or an application-specific integrated circuit (application-specific integrated circuit, ASIC).

It should be understood that, in this application, the method in the first aspect may specifically refer to the method in any one of the first aspect or the implementations of the first aspect.

### BRIEF DESCRIPTION OF DRAWINGS

FIG. 1 is a schematic diagram of a wireless communication system applicable to an embodiment of this application;
FIG. 2 is a schematic flowchart of a communication method;
FIG. 3 is a schematic flowchart of a communication method according to an embodiment of this application.
FIG. 4 is a schematic flowchart of another communication method according to an embodiment of this application;
FIG. 5 is a schematic diagram of time domain resources indicated by multicast scheduling information according to an embodiment of this application;
FIG. 6 is a schematic flowchart of still another communication method according to an embodiment of this application;
FIG. 7 is a schematic flowchart of still another communication method according to an embodiment of this application;
FIG. 8 is a schematic flowchart of still another communication method according to an embodiment of this application;
FIG. 9 is a schematic flowchart of still another communication method according to an embodiment of this application;
FIG. 10 is a schematic diagram of a structure of a storage apparatus according to an embodiment of this application;
FIG. 11 is a schematic flowchart of still another communication method according to an embodiment of this application;
FIG. 12 is a schematic flowchart of still another communication method according to an embodiment of this application;
FIG. 13 is a schematic diagram of a structure of a communication apparatus according to an embodiment of this application; and
FIG. 14 is a schematic diagram of a structure of another communication apparatus according to an embodiment of this application.

### DESCRIPTION OF EMBODIMENTS

The following describes technical solutions of this application with reference to accompanying drawings.

The technical solutions in embodiments of this application are applicable to various communication systems, for example, a 5th generation (5th generation, 5G) system or a new radio (new radio, NR) system, a long term evolution (long term evolution, LTE) system, an LTE frequency division duplex (frequency division duplex, FDD) system, an LTE time division duplex (time division duplex, TDD) system, and a universal mobile telecommunications system (universal mobile telecommunications system, UMTS).

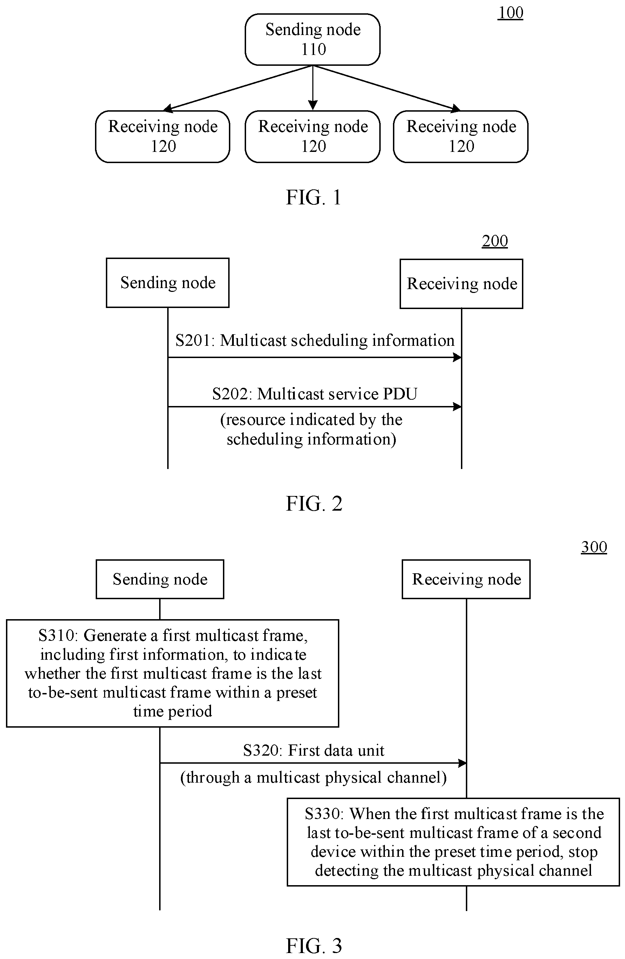

For ease of understanding embodiments of this application, a communication system applicable to embodiments of this application is first described in detail with reference to FIG. 1.

FIG. 1 is a schematic diagram of a wireless communication system 100 applicable to an embodiment of this application.

The wireless communication system 100 may include a sending node 110 and a plurality of receiving nodes 120.

The sending node 110 may establish a connection to each receiving node 120, and determine a group to which each receiving node belongs. The sending node 110 may send, in a multicast manner, information to a plurality of receiving nodes 120 that belong to a same group.

Multicast may also be referred to as multi-target broadcast or multicast, and is a transmission manner used in a network. Through multicast, the sending node 110 may transmit, by sending information once, the information to the plurality of receiving nodes 120 that belong to a same group. The plurality of receiving nodes 120 may belong to a selected subset of all possible destinations. That is, the sending node 110 may convey information to a plurality of explicitly indicated addresses.

When a large quantity of receiving nodes 120 need to receive data, if the data is sent in a unicast manner, the sending node 110 sends the data for a plurality of times, which occupies a large quantity of resources. However, if the sending node 110 sends the data to each receiving node 120 in a multicast manner, resource occupation can be reduced, air interface resources can be saved, spectrum utilization can be improved, and transmission efficiency can be improved.

A plurality of antennas may be configured for the sending node 110 and each receiving node 120, and an access network device may communicate with a terminal device by using a multiantenna technology.

The sending node 110 and each receiving node 120 are terminal devices. The sending node 110 and each receiving node 120 perform information transmission in a wireless short-range communication manner, for example, by using Bluetooth (Bluetooth, BT).

An intelligent terminal device may serve as the sending node 110, and send audio data to a plurality of Bluetooth headsets through multicast. Each Bluetooth headset may be a receiving node 120. A difference between a left-channel sound and a right-channel sound is considered, so that left-ear headsets in a plurality of pairs of Bluetooth headsets may belong to one group, and right-ear headsets in the plurality of pairs of Bluetooth headsets may belong to another group.

Alternatively, the sending node 110 may be an audio device in an intelligent cockpit domain of a vehicle, and each receiving node 120 may be a wireless speaker in the intelligent cockpit domain. The audio device sends audio data to a plurality of wireless speakers in a multicast manner, and the plurality of speakers are disposed at different locations of the cockpit in a distributed manner, so that users at different locations of the vehicle can hear a same sound.

A mobile phone is a sending node. An audio device in an intelligent cockpit sends data to other speakers, and users at different locations can hear music of the same quality.

The terminal device may be user equipment, an access terminal, a UE unit, a UE station, a mobile station, a mobile console, a remote station, a remote terminal, a mobile device, a UE terminal, a terminal, a wireless communication device, a multimedia device, a streaming media device, a UE proxy, a UE apparatus, or the like. The access terminal may be a cellular phone, a cordless phone, a session initiation protocol (Session initiation protocol, SIP) phone, a wireless local loop (Wireless local loop, WLL) station, a personal digital assistant (Personal digital assistant, PDA), a handheld device having a wireless communication function, a computing device, another processing device connected to a wireless modem, a vehicle-mounted device, a wearable device, a terminal in a future 5G network, a terminal in a future evolved public land mobile network (Public land mobile network, PLMN) network, or the like.

FIG. 2 is a schematic flowchart of a communication method.

The communication method 200 includes S201 and S202.

S201: A sending node sends multicast scheduling information to a receiving node.

The multicast scheduling information may be sent through a multicast physical channel. A channel is a channel for transmitting information. A physical channel is generally a channel for transmitting information by using a physical medium.

In S202, the sending node sends a multicast service protocol data unit (protocol data unit, PDU) to the receiving node on a time domain resource indicated by the multicast scheduling information.

There may be a plurality of receiving nodes, and the plurality of receiving nodes are located in a same group. The sending node may send, in a multicast manner, multicast service PDUs to the plurality of receiving nodes that belong to the same group.

The multicast scheduling information indicates a time domain resource used by the sending node to send the multicast service PDU. Within the time domain resource indicated by the multicast scheduling information, each receiving node keeps receiving the multicast physical channel, to receive the multicast service PDU.

The sending node may have completed sending of all multicast service PDUs before the time domain resource indicated by the multicast scheduling information ends. In other words, before the time resource indicated by the multicast scheduling information ends, the sending node has stopped sending the multicast service PDU. However, the receiving node cannot determine when the sending node stops sending the PDU. Even if a transmitting end does not send the multicast service PDU, the receiving node keeps receiving the multicast physical channel, that is, keeps receiving the multicast service PDU. As a result, power consumption of the receiving node is high. Receiving the multicast physical channel may also be understood as detecting or monitoring the multicast physical channel.

To resolve the foregoing problem, an embodiment of this application provides a communication method.

FIG. 3 is a schematic flowchart of a communication method according to an embodiment of this application.

The communication method 300 includes S310 to S330.

In S310, a sending node generates a first multicast frame, where the first multicast frame includes first information, and the first information indicates whether the first multicast frame is the last to-be-sent multicast frame within a preset time period.

In other words, within the preset time period, after sending the first multicast frame, the sending node does not send a multicast frame, that is, there is no to-be-sent multicast frame after the first multicast frame, and the first multicast frame is the last multicast frame sent by the sending node within the preset time period.

The multicast frame may be a multicast physical channel PDU, a multicast physical channel frame, a multicast physical channel PDU frame, or the like. The multicast frame may indicate a bit stream or bit information carried in one physical transmission performed through a multicast physical channel. The multicast frame is a data unit, and may also be referred to as a data block, a data packet, or the like.

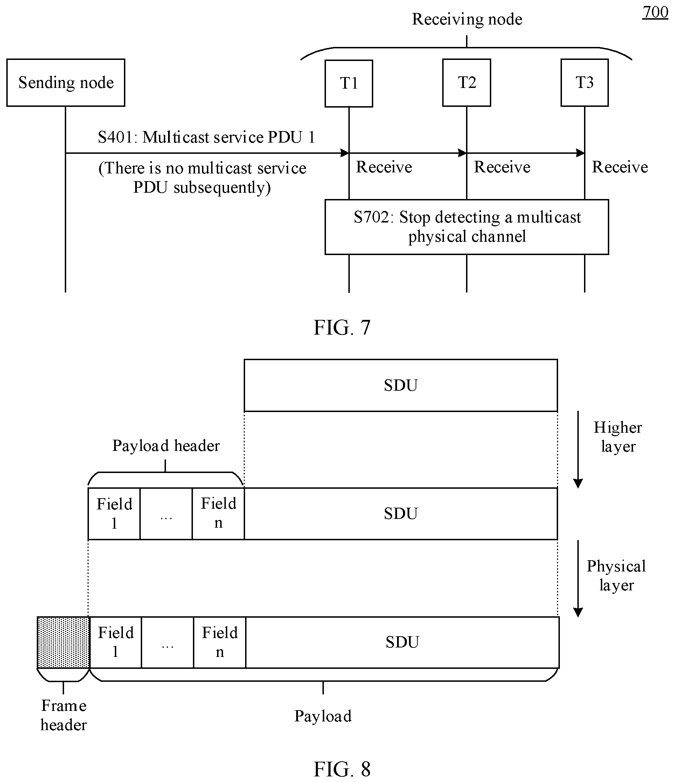

In a process of generating the first multicast frame, an initial multicast frame may pass through a plurality of layers, and a header corresponding to a layer may be added to a header of the multicast frame at each layer. Data with a header added is transmitted to a next layer, and a header corresponding to the next layer is added at the next layer. For details, refer to the description in FIG. 8. In the plurality of layers, a physical layer is the last layer.

The first information may be located in a header added at any layer. To be specific, the first information may be located in a header of the first multicast frame, namely, a physical layer frame header; or the first information may be located in a payload header of a physical layer, namely, a header of a layer other than the physical layer.

The sending node may include a new transmission storage area. A second device may read a first data unit from the new transmission storage area. The second device may form the first multicast frame based on the first data unit and the first information. When no other data unit is stored in the new transmission storage area, the first information indicates that the first multicast frame is the last multicast frame sent by the second device within the preset time period.

The second device may remove the first data unit from the new transmission storage area after reading the first data unit. After removing the first data unit from the new transmission storage area, the second device may determine whether no data unit is stored in the new transmission storage area. If no data unit is stored in the new transmission storage area after the second device removes the first data unit from the new transmission storage area, it may be determined that the first data unit is the last to-be-sent multicast data unit within the preset time period, that is, the first multicast frame is the last multicast frame sent by the second device within the preset time period. If a data unit is still stored in the new transmission storage area after the second device removes the first data unit from the new transmission storage area, it may be determined that the first multicast frame is not the last multicast frame sent by the second device within the preset time period.

In S320, the sending node sends the first multicast frame to at least one receiving node through the multicast physical channel.

The multicast physical channel may be a physical channel dedicated to transmitting a multicast frame, or may be multiplexed with another physical channel. The multicast physical channel may be a physical channel used for multicast frame transmission.

The at least one receiving node may belong to a same target group. In other words, the sending node may transmit the first multicast frame to each receiving node in one target group through one time of data sending.

It should be understood that, that the sending node sends the first multicast frame may be new transmission of the first multicast frame, or may be retransmission of the first multicast frame. That is, after newly transmitting the first multicast frame, the sending node may retransmit the first multicast frame. Both newly transmitted content and retransmitted content are the first multicast frame.

In S330, when the first information indicates that the first multicast frame is the last multicast frame sent by the transmit node within the preset time period, the receiving node stops receiving the multicast physical channel within the preset time period.

The sending node adds the first information to the first multicast frame through S310 to S330, to notify the receiving node whether there is a multicast frame to be sent after the first multicast frame. Therefore, after receiving the first multicast frame, the receiving node may determine, based on the first information, whether to stop receiving the multicast physical channel. When the first information indicates that the first multicast frame is the last multicast frame, the receiving node stops receiving the physical channel. This can reduce power consumption of the receiving node.

If the first information is located in the physical layer frame header of the first multicast frame, that is, the first information is added by the physical layer of the sending node, the physical layer of the receiving node may parse the physical layer frame header of the first multicast frame to determine the first information.

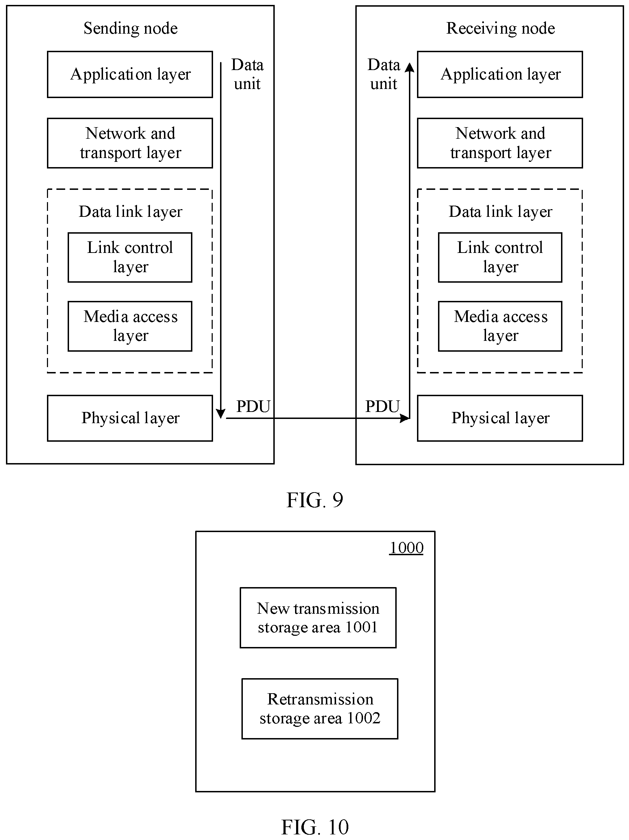

A physical layer frame header of a multicast frame is a header added by the physical layer of the second device to the multicast frame in a process in which the second device generates the multicast frame. For details, refer to the descriptions in FIG. 8 and FIG. 9.

The physical layer frame header may include control information such as coding information. The physical layer frame header of the multicast frame may further include indication information that indicates whether the multicast frame is newly transmitted or retransmitted. The coding information may include a modulation and coding scheme (modulation and coding scheme, MCS), and indicates a modulation scheme, a coding rate, and the like of the physical layer.

If the first information is located in the payload header of the physical layer of the first multicast frame, that is, the first information is added by a preset layer of the sending node, a preset layer of the receiving node may parse the payload header of the physical layer of the first multicast frame, to determine the first information. It should be understood that each layer of the receiving node is in a one-to-one correspondence with each layer of the sending node, and the preset layer of the receiving node is a layer corresponding to the preset layer of the sending node.

The payload header of the physical layer of the multicast frame refers to a header that is added to the multicast frame by a higher layer that is of the sending node and that is relative to the physical layer in a process of generating the multicast frame by the sending node. For details, refer to the descriptions in FIG. 8 and FIG. 9.

The payload header of the physical layer may include higher layer control information of the multicast frame. The payload header of the physical layer may be added by a data link layer of the sending node, and the payload header of the physical layer may include link layer related control information such as segmentation, reassembly, multiplexing, and a logical channel priority of the data link layer.

The preset time period may be n transmission time intervals (transmission time intervals, TTIs), n radio frames, n subframes, n slots, or n symbols, where n is a positive integer.

Both the sending node and the receiving node may include a radio link layer and a higher layer. The TTI is a parameter of a digital communication network, and is a length for independent decoding and transmission in a radio link. The TTI is related to a size of a data block from the higher layer to the radio link layer. Generally, 1 TTI = 1 ms.

Each radio frame is 10 subframes (subframes), each subframe is two slots (slots), and each slot is 10 symbols (symbols). Each subframe is 1 ms.

In some embodiments, the receiving node may check the first multicast frame, and when the check succeeds, stops receiving the multicast physical channel.

The first multicast frame may carry a check code. The check code may be, for example, a cyclic redundancy check (cyclic redundancy check, CRC) code.

When a result of the check indicates that the first multicast frame is correct, the receiving node may stop receiving the multicast physical channel based on the first information.

When a result of the check indicates that the first multicast frame is incorrect, the receiving node sends retransmission indication information to the sending node. The retransmission indication information may indicate the sending node to resend the first multicast frame.

The sending node may resend the first multicast frame based on the received retransmission indication information through the multicast physical channel.

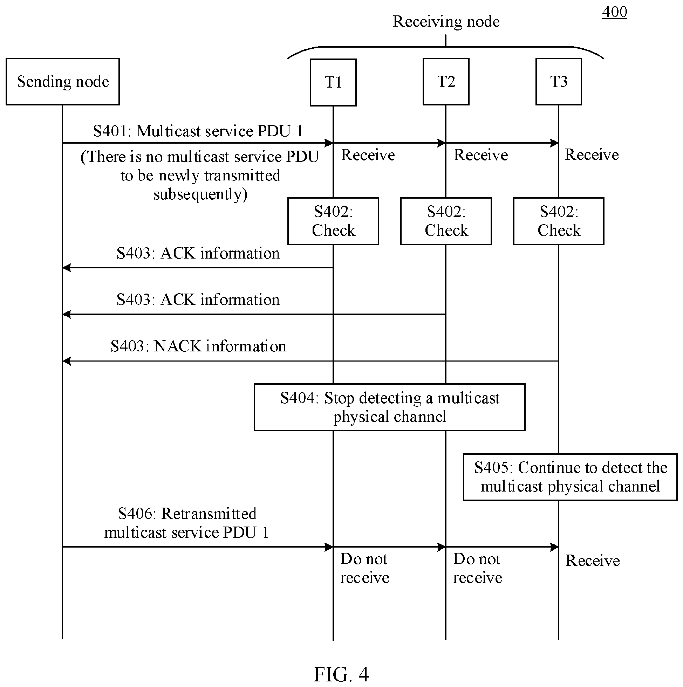

FIG. 4 is a schematic flowchart of a communication method according to an embodiment of this application.

The communication method 400 is performed in a reliable multicast manner. The communication method 400 includes S401 to S406.

In S401, a sending node sends a multicast service PDU 1.

The multicast service PDU is sent through a multicast physical channel. The receiving node receives the multicast physical channel, to receive the multicast service PDU.

Receiving nodes T1, T2, and T3 belong to a same group, and may receive the multicast service PDU 1 sent by the sending node.

In S402, the receiving node checks the multicast service PDU 1.

For example, the multicast service PDU 1 may include a CRC code. The receiving node may determine, by using the CRC code, whether there is an error code in data, to receive or check whether an error occurs after data transmission or storage.

After receiving the multicast service PDU 1 sent by the sending node by using the reliable multicast manner, the receiving node may check the received multicast service PDU 1 by using the CRC code in the multicast service PDU 1.

In S403, the receiving node may send response information to the sending node based on a check result.

When a CRC check result indicates that the received multicast service PDU 1 is correct, the response information sent by the receiving node may be acknowledgment (acknowledgement, ACK) information. When a CRC check result indicates that the received multicast service PDU 1 is incorrect, the response information sent by the receiving node may be negative acknowledgment (negative acknowledgement, NACK) information.

The response information may be sent through a multicast physical channel. Different receiving nodes may send response information at different times. For example, before S401 is performed, the sending node may send the multicast scheduling information to each receiving node. The multicast scheduling information may be sent through a multicast physical channel. The multicast scheduling information may be located in a header of one or more PDUs. Alternatively, the multicast scheduling information may be separately sent, for example, located in a control PDU.

The multicast scheduling information may be used to divide time domain resources of the multicast physical channel. Each preset time period may correspond to one piece of multicast scheduling information. In other words, the multicast scheduling information may be used to divide time domain resources of the multicast physical channel within the preset time period. In some embodiments, the multicast scheduling information may be carried in the first PDU that is sent by the sending node through the multicast physical channel after each preset time period starts.

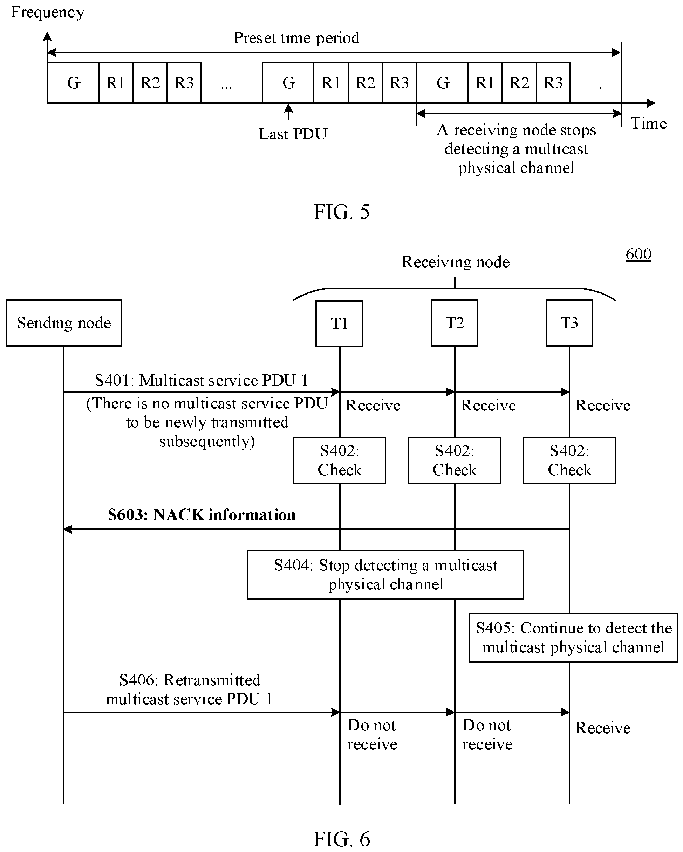

Specifically, the multicast scheduling information may indicate a time domain resource G used by the sending node to send each multicast service PDU, a time domain resource R1 used by the receiving node T1 to send response information, a time domain resource R2 used by the receiving node T2 to send response information, and a time domain resource R3 used by the receiving node T3 to send response information. For example, as shown in FIG. 5, resources G, R1, R2, and R3 correspond to different time domains. It should be understood that the multicast scheduling information may indicate a plurality of time domain resources G and time domain resources R1, R2, and R3 corresponding to each G.

When receiving the NACK, the sending node may resend the multicast service PDU 1. That is, when receiving the NACK, the sending node retransmits the multicast service PDU 1. The NACK may be understood as retransmission indication information.

The multicast service PDU 1 includes first information, where the first information indicates whether there is a multicast service PDU to be newly transmitted after the multicast service PDU 1. That is, in the last multicast service PDU sent by the sending node, the first information indicates that there is no multicast service PDU to be newly transmitted; and in other multicast service PDUs, the first information indicates that there is a multicast service PDU to be newly transmitted.

If the first information in the multicast service PDU 1 indicates that there is a multicast service PDU to be newly transmitted, the receiving node may keep receiving the multicast physical channel. That is, the newly transmitted other multicast service PDU or the retransmitted multicast service PDU 1 may be used as the multicast service PDU 1, and S401 to S403 are performed again.

If the first information in the multicast service PDU 1 indicates that there is no multicast service PDU to be newly transmitted subsequently, each receiving node may determine, based on a result of checking the received multicast service PDU 1 in S402, whether to continue to receive the multicast physical channel. FIG. 4 shows a case in which the first information indicates that there is no multicast service PDU to be newly transmitted subsequently.

Specifically, if the receiving nodes T1 and T2 determine that the received multicast service PDU 1 is correct in S402, and the first information indicates that there is no multicast service PDU 1 to be newly transmitted subsequently, the receiving nodes T1 and T2 separately perform S404.

In S404, the receiving node stops receiving the multicast physical channel.

If the receiving node T3 determines that the received multicast service PDU is incorrect in S402, and the first information indicates that there is no multicast service PDU to be newly transmitted subsequently, the receiving node T3 performs S405.

In S405, the receiving node continues to receive the multicast physical channel.

In S406, the sending node sends a retransmitted multicast service PDU when receiving the NACK.

In other words, when receiving the NACK, the sending node retransmits the multicast service PDU.

The receiving nodes T1 and T2 have stopped receiving the multicast physical channel, and the receiving nodes T1 and T2 no longer receive the last multicast service PDU retransmitted by the sending node. The receiving node T3 is still receiving the channel, and the receiving node 3 receives the last multicast service PDU retransmitted by the sending node.

Then, the receiving node T3 may check the re-received multicast service PDU 1 (which may also be understood as performing S402 again). If it is determined through a check that the retransmitted multicast service PDU 1 is correct, the receiving node T3 may stop receiving the multicast physical channel, and send ACK information to the sending node. If it is determined through a check that the retransmitted multicast service PDU 1 is incorrect, the receiving node T3 sends NACK information to the sending node, so that the sending node sends the multicast service PDU 1 again.

By adding the first information to a multicast service PDU, the sending node may notify the receiving node whether there is a multicast service PDU to be newly transmitted after the multicast service PDU. Therefore, when the receiving node correctly receives the multicast service PDU and there is no multicast service PDU to be newly transmitted subsequently, the receiving node may no longer receive the multicast physical channel. This reduces power consumption of the receiving node.

FIG. 5A is a schematic diagram of a time domain resource according to an embodiment of this application.

A time domain resource that is within a preset time period and that is indicated by multicast scheduling information is shown in FIG. 5.

The preset time period includes a plurality of time domain resources G and time domain resources R1, R2, and R3 corresponding to each G. The time domain resource G is used by a sending node to send a multicast frame, the time domain resource R1 is used to receive response information sent by a node T1, the time domain resource R2 is used to receive response information sent by a node T2, and the time domain resource R3 is used to receive response information sent by a node T3.

On a time domain resource G, the sending node sends the last PDU within a preset time period, that is, after the sending node sends the PDU, the sending node does not perform new PDU transmission within the preset time period. The PDU includes first information, and indicates that the PDU is the last PDU of the sending node within the preset time period.

Based on the first information in the PDU, the receiving node may stop receiving multicast physical channel, and no longer send response information within a time segment from a next time domain resource G to the end of the preset time period. For example, the receiving node that correctly checks the PDU may stop receiving a physical channel from the next time domain resource G, and no longer receive a PDU sent by the sending node. The receiving node that correctly checks the PDU may perform S403 and S405, perform receiving and sending until a check on the PDU retransmitted by the sending node in step S406 is correct, and stop receiving the multicast physical channel.

FIG. 6 is a schematic flowchart of a communication method according to an embodiment of this application.

The communication method 600 is performed in a semi-reliable multicast manner. Steps in the communication method 600 other than S603 may be the same as those in the method 400.

Each receiving node receives a multicast physical channel.

In S401, a sending node sends a multicast service PDU 1 to the receiving node through the multicast physical channel.

The multicast service PDU 1 includes first information. The first information indicates whether there is a multicast service PDU to be newly transmitted after the multicast service PDU 1.

In S402, the receiving node checks the received multicast service PDU.

When the first information indicates that there is still a multicast service PDU to be newly transmitted after the multicast service PDU 1, each receiving node continues to receive the multicast physical channel.

The processing method of the semi-reliable multicast is similar to that of the reliable multicast. The receiving node feeds back NACK information when the received multicast service PDU is incorrect. A difference lies in that the receiving node does not feed back ACK information when the received multicast service PDU is correct.

When receiving the NACK, the sending node may resend the multicast service PDU 1.

When the first information indicates that there is no multicast service PDU to be newly transmitted subsequently, each receiving node may determine, based on a check result of the multicast service PDU 1, whether to stop receiving the multicast physical channel. FIG. 6 describes in detail a case in which the first information indicates that there is no multicast service PDU to be newly transmitted subsequently.

Then, S603 is performed.

In S603, if the check result indicates that the received multicast service PDU is incorrect, the receiving node sends NACK information to the sending node.

Similar to the method 400, if the first information in the multicast service PDU indicates that there is no multicast service PDU to be newly transmitted, each receiving node may determine, based on the check result of the received multicast service PDU in S402, whether to continue to receive the multicast physical channel.

Specifically, if receiving nodes T1 and T2 determine that the received multicast service PDU is correct in S402, and the first information indicates that there is no multicast service PDU to be newly transmitted, the receiving nodes T1 and T2 separately perform S404.

In S404, the receiving node stops receiving the multicast physical channel.

If a receiving node T3 determines that the received multicast service PDU is incorrect in S402, and the first information indicates that there is no multicast service PDU to be newly transmitted, the receiving node T3 performs S405.

In S405, the receiving node continues to receive the multicast physical channel.

In S406, when receiving the NACK, the sending node resends the multicast service PDU.

The receiving nodes T1 and T2 have stopped receiving the multicast physical channel, and the receiving nodes T1 and T2 each no longer receive the last multicast service PDU retransmitted by the sending node. The receiving node T3 still receives the channel, and the receiving node 3 receives the last multicast service PDU retransmitted by the sending node.

Then, the receiving node T3 may perform S402 again. The receiving node T3 may check the last retransmitted multicast service PDU. If it is determined through check that the last retransmitted multicast service PDU is correct, the receiving node T3 may stop receiving the multicast physical channel, and send ACK information to the sending node. If it is determined through a check that the last retransmitted multicast service PDU is incorrect, the receiving node T3 sends NACK information to the sending node, so that the sending node resends the last multicast service PDU.

FIG. 7 is a schematic flowchart of a communication method according to an embodiment of this application.

The communication method 700 is performed in a unidirectional multicast manner. The communication method 700 includes S401 and S702.

In S401, a sending node sends a multicast service PDU 1.

In the unidirectional multicast manner, each receiving node neither feeds back ACK information nor feeds back NACK information. Therefore, the receiving node may or may not check the received multicast service PDU. The sending node does not need to retransmit each multicast service PDU.

The multicast service PDU 1 includes first information. The first information indicates whether there is a multicast service PDU after the multicast service PDU 1.

When the first information indicates that there is a multicast service PDU after the multicast service PDU 1, each receiving node continues to receive a multicast physical channel.

When the first information indicates that there is no multicast service PDU subsequently, each receiving node may perform S702.

In S702, the receiving node stops receiving the multicast physical channel.

Through S401 and S702, the first information is added to the multicast service PDU, and the sending node may notify the receiving node whether there is a multicast service PDU to be sent after the multicast service PDU. Therefore, when there is no multicast service PDU to be transmitted subsequently, the receiving node may stop receiving the multicast physical channel. This reduces power consumption of the receiving node.

FIG. 8 is a schematic diagram of a structure of a multicast frame according to an embodiment of this application.

Each layer of a sending node may be configured to: use a PDU output by an upper layer as a service data unit (service data unit, SDU), add a header, and encapsulate the PDU to form a new PDU. Each layer before a physical layer may further transmit the formed PDU to a next layer as an SDU of the next layer. In FIG. 8, an SDU and a PDU at a data link layer of a sending node are used as an example for description.

A higher layer, such as the data link layer or a media access layer, of the sending node may add a payload header to an SDU obtained from an upper layer of the sending node, to obtain the PDU. A physical layer entity obtains the PDU from the link control layer or the media access layer, uses the PDU as a payload (payload), adds a physical layer frame header (header) before the payload to form a multicast frame, and sends the multicast frame on a physical channel.

A receiving node receives a data frame from a physical multicast channel, where the data frame may include a physical layer frame header and a payload. The payload is a PDU of an upper layer relative to the physical layer (the media access layer or the link control layer). After removing the physical layer frame header, the physical layer entity transmits the payload to the data link layer or the media access layer for processing. The payload may include the payload header and the SDU. The payload header may include one or more fields. The data link layer or the media access layer of the receiving node may obtain related information of the SDU based on the payload header, and transmit the SDU to an upper layer of the receiving node for processing. The upper layer of the physical layer is an upper layer relative to the physical layer.

In the methods 300, 400, 600, and 700, first information may be located in a header added at any layer. That is, the first information may be located in a header of a first PDU, that is, a header of the physical layer. Alternatively, the first information may be located in a payload header of the physical layer.

FIG. 9 is a schematic flowchart of a communication method according to an embodiment of this application.

A data unit in a sending node is processed by an application layer, a network and transport layer, a data link layer, and a physical layer in sequence to generate a PDU. The data link layer includes a link control layer and a media access layer, and the data unit passes through the link control layer or the media access layer at the data link layer.

Then, the sending node may send a PDU to a receiving node. The receiving node processes the PDU by using a physical layer, a data link layer, a network and transport layer, and an application layer in sequence, to obtain the data unit.

The physical layer provides a physical connection for the data link layer by using a transmission medium and transparently transmits a bit stream. The data link layer provides functions such as resource management, access control, data segmentation, cascading, and a working mode to ensure reliable data transmission.

A frame header of a multicast frame mentioned in this solution means a frame header of a physical layer, and a payload of the multicast frame is a data unit output by a data link layer. A payload header of the multicast frame may be a header of a data unit output by a media access layer or the data link layer, namely, a header added by the media access layer or the data link layer.

FIG. 10 is a schematic diagram of a structure of a storage apparatus according to an embodiment of this application. The storage apparatus 1000 may be a buffer (buffer) of the sending node in the methods 300, 400, 600, and 700, or another storage apparatus.

The storage apparatus 1000 includes a new transmission storage area 1001 and a retransmission storage area 1002, where the new transmission storage area 1001 may be configured to store a multicast service PDU to be newly transmitted, and the retransmission storage area 1002 is configured to store a newly transmitted multicast service PDU. Both the new transmission storage area 1001 and the retransmission storage area 1002 may be buffers.

The sending node may read a multicast service PDU from the new transmission storage area 1001 or the retransmission storage area 1002, add first information to the multicast service PDU, and then perform S401 to send the multicast service PDU to a receiving node. The first information includes an identifier T and an identifier R, where the identifier T indicates whether there is a PDU in the new transmission storage area 1001, and the identifier R indicates whether there is a PDU in the retransmission storage area 1002. For example, if the identifier T is 1, it indicates that there is a PDU in the new transmission storage area 1001; if the identifier T is 0, it indicates that there is no PDU in the new transmission storage area 1001; if the identifier R is 1, it indicates that there is a PDU in the retransmission storage area 1002; and if the identifier R is 0, it indicates that there is no PDU in the retransmission storage area 1002.

That the sending node may read a multicast service PDU from the new transmission storage area 1001 or the retransmission storage area 1002 may be that a physical layer of the sending node reads a PDU generated by a media access layer or a link control layer, or may be that the media access layer or the link control layer reads a PDU generated by a network and transport layer.

According to the method 400 or the method 600, the sending node reads a multicast service PDU in the new transmission storage area 1001, and may remove the multicast service PDU from the new transmission storage area 1001, store the multicast service PDU in the retransmission storage area 1002, and then add the first information to the multicast service PDU.

Before a new multicast service PDU is added to the retransmission storage area 1002, the original multicast service PDU may not be deleted. That is, the identifier R added to the multicast service PDU may always be 1.

Alternatively, the sending node may perform retransmission only a limited quantity of times. For example, retransmission may be performed only n times, where n is a positive integer. After the n times of retransmission, the sending node may delete the multicast service PDU in the retransmission storage area 1002. In this case, after reading the multicast service PDU from the retransmission storage area 1002 for the n^{th} time, the sending node may remove the multicast service PDU from the retransmission storage area 1002. Then, the identifier R added by the sending node to the multicast service PDU may be 0.

When determining that an identifier T in a multicast service PDU 1 is 1 in S402, the receiving node continues to receive a multicast physical channel.

If the sending node reads the multicast service PDU 1 from the new transmission storage area 1001 and removes the multicast service PDU 1 from the new transmission storage area 1001, there is no other multicast service PDU in the new transmission storage area 1001, that is, the multicast service PDU 1 is the last multicast service PDU, and may also be understood as the last multicast service PDU to be sent or the last multicast service PDU to be newly transmitted.

That is, according to the method 400 or 600, when the multicast service PDU 1 is the last multicast service PDU, in the first information added by the sending node to the multicast service PDU 1, the identifier T is 0, and the identifier R is 1. When the multicast service PDU 1 is not the last multicast service PDU, in the first information added by the sending node to the multicast service PDU 1, the identifier T is 1, and the identifier R is 1.

When the receiving node determines that the identifier T is 0 and the identifier R is 1 in the multicast service PDU 1, if a check in S402 is correct, S404 may be performed; or if the check in S402 is incorrect, S405 is performed, and NACK information is sent to the sending node.

When the sending node does not receive NACK information within a preset time, the sending node may remove the multicast service PDU from the retransmission storage area 1002, and may read a next multicast service PDU from the new transmission storage area 1001, and perform subsequent steps. When there is no multicast service PDU in the new transmission storage area 1001, the sending node may stop reading the new transmission storage area 1001 within a preset time period.

When the sending node receives NACK information within a preset receiving time, the sending node may read a multicast service PDU from the retransmission storage area 1002, add first information, and send the multicast service PDU.

According to the method 700, after reading a multicast service PDU from the new transmission storage area 1001, the sending node removes the multicast service PDU from the new transmission storage area 1001, adds first information to the multicast service PDU, and then performs S401.

In the method 700, retransmission does not need to be performed, and the sending node does not store a multicast service PDU in the retransmission storage area 1002. Therefore, the identifier R added by the sending node is always 0.

If the sending node reads the multicast service PDU 1 from the new transmission storage area 1001 and removes the multicast service PDU 1 from the new transmission storage area 1001, there is no other multicast service PDU in the new transmission storage area 1001, that is, the multicast service PDU 1 is the last multicast service PDU.

That is, according to the method 700, when the multicast service PDU 1 is the last multicast service PDU, in the first information added by the sending node to the multicast service PDU 1, the identifier T is 0, and the identifier R is 0. When the multicast service PDU 1 is not the last multicast service PDU, in the first information added by the sending node to the multicast service PDU 1, the identifier T is 1, and the identifier R is 0.

When determining that the identifier R of the multicast service PDU is 0, the receiving node may not send response information to the sending node any more.

When determining that the identifier T in the multicast service PDU is 0 and the identifier R is 0, the receiving node may stop receiving the multicast physical channel. When determining that the identifier T in the multicast service PDU is 1 and the identifier R is 0, the receiving node continues to receive the multicast physical channel.

The storage apparatus in the sending node that uses the method 700 may include only a new transmission storage area, and does not include a retransmission storage area.

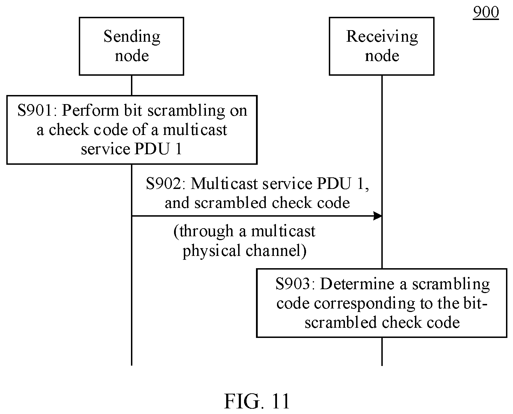

FIG. 11 is a schematic flowchart of a communication method according to an embodiment of this application.

The communication method 900 includes S901 to S903.

In S901, a sending node performs bit scrambling on a check code of a multicast service PDU 1.

The sending node may determine, based on whether the multicast service PDU 1 is the last PDU, that is, whether a new PDU is to be sent after the multicast service PDU 1, a scrambling code for performing bit scrambling the check code of the multicast service PDU 1.

When no new PDU is to be sent after the multicast service PDU 1, the sending node performs bit scrambling on the check code of the multicast service PDU 1 by using a scrambling code 1; or when a new PDU is to be sent after the multicast service PDU 1, the sending node performs bit scrambling on the check code of the multicast service PDU 1 by using a scrambling code 2. The scrambling code 1 is different from the scrambling code 2.

The check code may be, for example, a CRC code.

In S902, the sending node sends the multicast service PDU 1 and the bit-scrambled check code to a receiving node through a multicast physical channel.

The scrambled check code may be located in a header, a tail, or another location of the multicast service PDU 1.

In S903, the receiving node determines a scrambling code corresponding to the bit-scrambled check code, to determine whether the multicast service PDU 1 is the last PDU.

The receiving node may perform bit descrambling on the bit-scrambled check code by separately using the scrambling code 1 and the scrambling code 2, to obtain the check code. The receiving node may determine a scrambling code used for a check code that can enable a check on the multicast service PDU 1 to be successful.

If the scrambling code 1 enables the check to succeed, the receiving node may determine that there is no new PDU to be sent after the multicast service PDU 1. The receiving node may no longer receive the multicast physical channel.

If the scrambling code 1 enables the check on the multicast service PDU 1 to succeed, the receiving node may no longer receive the multicast physical channel.

If the scrambling code 2 enables the check to succeed, the receiving node may determine that there is still a new PDU to be sent after the multicast service PDU 1. The receiving node may continue to receive the multicast physical channel.

When reliable multicast is used, if either of the scrambling code 1 and the scrambling code 2 enables the check on the multicast service PDU 1 to succeed, the receiving node may send ACK information to the sending node.

If neither the scrambling code 1 nor the scrambling code 2 can enable the check to succeed, the receiving node may determine that the check fails.

When determining that the check fails, the receiving node continues to receive the channel.

When semi-reliable multicast or reliable multicast is used, the receiving node may send NACK information to the sending node.

The bit scrambling may also be referred to as bit scrambling, and an XOR operation may be performed on to-be-scrambled information and the scrambling code through the bit scrambling. The scrambling code may be understood as a preset sequence. Generally, the scrambling code is not all "0"s or all "1"s, and has many jumps (that is, from 0 to 1, or from 1 to 0). The receiving node may perform an XOR operation on bit scrambled information and the scrambling code, to restore the information before the bit scrambling.

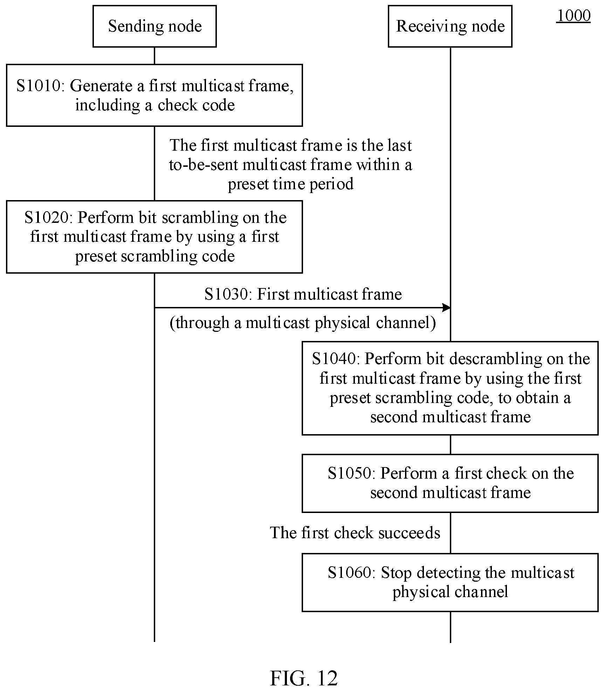

FIG. 12 is a schematic flowchart of a communication method according to an embodiment of this application.

The communication method 1000 includes S1010 to S 1060.

In S1010, a sending node generates a first multicast frame, where the first multicast frame includes a check code.

The check code may be located in a physical layer frame header of the first multicast frame, a payload header of a physical layer, a tail, or another location. The check code may be a CRC code. The sending node may perform a CRC check on a first data unit, to obtain a CRC code.

In S1020, when the first multicast frame is the last to-be-sent multicast frame within a preset time period, the sending node performs bit scrambling on the first multicast frame by using a first preset scrambling code.

The sending node may perform bit scrambling on all or a part of the first multicast frame. For example, the sending node may perform scrambling on a check code in the first multicast frame, to obtain the first multicast frame.

In S1030, the sending node sends the first multicast frame to at least one receiving node through a multicast physical channel.

In S1040, the receiving node performs bit descrambling on the first multicast frame by using the first preset scrambling code, to obtain a second multicast frame.

It should be understood that a location at which the receiving node performs bit descrambling on the first multicast frame corresponds to a location at which the sending node performs bit scrambling on an initial multicast frame. For example, when the sending node may perform scrambling on a check code in the initial multicast frame to obtain the first multicast frame, the receiving node may perform bit descrambling on the check code in the first multicast frame, to obtain the second multicast frame.

In S 1050, the receiving node performs a first check on the second multicast frame.

If the check succeeds, a check result indicates that the first multicast frame is correct. If the check fails, a check result indicates that the first multicast frame is incorrect.

In S1060, when the first check succeeds, the receiving node stops receiving the multicast physical channel.

By using S1010 to S1060, the sending node implicitly notifies the receiving node whether the first multicast frame is the last to-be-sent multicast frame within the preset time period. The receiving node may determine, by determining that the first preset scrambling code is a scrambling code corresponding to bit scrambling a check code, that the first multicast frame is the last to-be-sent multicast frame. Therefore, the receiving node may stop receiving the multicast physical channel. This reduces power consumption of the receiving node.

The multicast frame may be a multicast physical channel PDU, a multicast physical channel frame, a multicast physical channel PDU frame, or the like. The multicast frame may indicate a bit stream or bit information carried in one physical transmission performed through a multicast physical channel, namely, data or information sent by the sending node each time. The multicast frame is a data unit, and may also be referred to as a data block, a data packet, or the like.

The multicast physical channel may be a physical channel dedicated to transmitting a multicast frame, or may be multiplexed with another physical channel. The multicast physical channel may be a physical channel used for multicast frame transmission.

If the initial multicast frame is not the last to-be-sent multicast frame within the preset time period, the sending node may perform bit scrambling on the initial multicast frame by using a second preset scrambling code, to obtain the first multicast frame. The first preset scrambling code is different from the second preset scrambling code.

After receiving the first multicast frame, the receiving node may determine whether the second preset scrambling code is a scrambling code corresponding to the first multicast frame.

The receiving node may perform bit descrambling on the first multicast frame by using the second preset scrambling code, to obtain a third multicast frame. The receiving node may perform a second check on the third multicast frame.

When the second check succeeds, the receiving node may determine that the second preset scrambling code is a scrambling code corresponding to bit scrambling a check code. In other words, when the second check succeeds, the receiving node may determine that the first multicast frame is not the last first multicast frame to be sent by the sending node (that is, the initial multicast frame corresponding to the first multicast frame is not the last to-be-sent multicast frame), and the receiving node may continue to receive the multicast physical channel.

In some cases, both the first check and the second check may fail, and this case may be caused by a transmission error. The receiving node may send retransmission indication information to the sending node, and continue to receive the multicast physical channel.

The sending node may resend the first data unit based on the retransmission indication information.

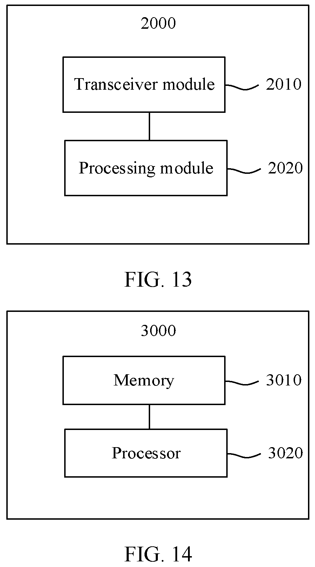

The foregoing describes the method embodiments of this application with reference to FIG. 1 to FIG. 12. The following describes apparatus embodiments of this application with reference to FIG. 13 to FIG. 14. It should be understood that the descriptions of the method embodiments correspond to descriptions of the apparatus embodiments. Therefore, for parts that are not described in detail, refer to the descriptions in the foregoing method embodiments.

FIG. 13 is a schematic diagram of a structure of a communication apparatus according to an embodiment of this application.

A communication apparatus 2000 may include a transceiver module 2010 and a processing module 2020.

In some embodiments, the transceiver module 2010 is configured to receive, through a multicast physical channel, a first multicast frame sent by a second device, where the first multicast frame includes first information.

It should be understood that the first information may be the first information in the method 300, the method 400, the method 600, and the method 700.

The processing module 2020 is configured to: when the first information indicates that the first multicast frame is the last multicast frame sent by the second device within a preset time period, stop receiving the multicast physical channel within the preset time period.

Optionally, the first information is located in a physical layer frame header of the first multicast frame.

The processing module 2020 is further configured to parse the physical layer frame header of the first multicast frame by using a physical layer, to determine the first information.

Optionally, the first information is located in a payload header of a physical layer of the first multicast frame.

The processing module 2020 is further configured to parse the payload header of the physical layer by using a preset layer, to determine the first information, where the preset layer is a higher layer relative to the physical layer.

Optionally, the processing module 2020 is further configured to perform a check on the first multicast frame.

The processing module 2020 is further configured to: when a result of the check indicates that the first multicast frame is correct, stop receiving the multicast physical channel within the preset time period.

The transceiver module 2010 is further configured to: when a result of the check indicates that the first multicast frame is incorrect, send retransmission indication information to the second device, where the retransmission indication information indicates a sending node to resend the first multicast frame.

Optionally, the first multicast frame includes second information, and the second information indicates that a multicast frame is stored in a retransmission storage area of the second device.

In some other embodiments, the transceiver module 2010 is configured to receive, through a multicast physical channel, a first multicast frame sent by the second device.

The processing module 2020 is configured to perform bit descrambling on the first multicast frame by using a first preset scrambling code, to obtain a second multicast frame, where the first preset scrambling code is a scrambling code obtained after bit scrambling is performed on the last multicast frame sent by the second device within a preset time period.

The processing module 2020 is further configured to perform a first check on the second multicast frame.

The processing module 2020 is further configured to: when the first check succeeds, stop receiving the multicast physical channel within the preset time period.

Optionally, the processing module 2020 is further configured to perform bit descrambling on a check code in the first multicast frame by using the first preset scrambling code, to obtain the second multicast frame.

Optionally, the check code is located in a physical layer frame header of the first multicast frame or a physical layer payload header of the first multicast frame.

Optionally, the processing module 2020 is further configured to perform bit descrambling on the first multicast frame by using a second preset scrambling code, to obtain a third multicast frame, where the second preset scrambling code is a scrambling code used by the second device to perform bit scrambling on a multicast frame other than the last multicast frame sent within the preset time period, and the second preset scrambling code is different from the first preset scrambling code.

The processing module 2020 is further configured to perform, by the first device, a second check on the third multicast frame.

The transceiver module 2010 is further configured to: when both the first check and the second check fail, send retransmission indication information to a sending node, where the retransmission indication information indicates the sending node to resend the first multicast frame.

In some other embodiments, the processing module 2020 is configured to generate a first multicast frame, where the first multicast frame includes first information, and the first information indicates whether the first multicast frame is the last multicast frame sent by the second device within a preset time period.

The transceiver module 2010 is configured to send the first multicast frame to a plurality of first devices through a multicast physical channel.

Optionally, the first information is located in a physical layer frame header of the first multicast frame.

The processing module 2020 is further configured to generate the physical layer frame header by using the physical layer.

Optionally, the first information is located in a payload header of a physical layer of the first multicast frame.

The processing module 2020 is further configured to generate the payload header by using a preset layer, where the preset layer is a higher layer relative to the physical layer.

Optionally, the transceiver module 2010 is further configured to receive retransmission indication information sent by the first device, where the retransmission indication information is sent when a check on the first multicast frame by the first device fails.

The transceiver module 2010 is further configured to resend the first multicast frame based on the retransmission indication information through the multicast physical channel.

Optionally, the first multicast frame includes second information, and the second information indicates that a multicast frame is stored in a retransmission storage area of the second device.

The processing module 2020 is further configured to read the first multicast frame from the retransmission storage area based on the second information.

The transceiver module 2010 is further configured to resend the first multicast frame through the multicast physical channel.

In some other embodiments, the processing module 2020 is configured to generate a first multicast frame, where the first multicast frame includes a check code.

The processing module 2020 is further configured to: when the first multicast frame is the last to-be-sent multicast frame within a preset time period, perform bit scrambling on the first multicast frame by using a first preset scrambling code.

The transceiver module 2010 is configured to send bit-scrambled first multicast frame to at least one first device through a multicast physical channel.

Optionally, the processing module 2020 is further configured to: when the first multicast frame is the last to-be-sent multicast frame within the preset time period, perform bit scrambling on the check code by using a first preset scrambling code.

Optionally, the check code is located in a physical layer frame header of the first multicast frame or a physical layer payload header of the first multicast frame.

Optionally, the processing module 2020 is further configured to: when the first multicast frame is not the last to-be-sent multicast frame within the preset time period, perform scrambling on the first multicast frame by using a first preset scrambling code, where the second preset scrambling code is different from the first preset scrambling code; and
the processing module 2020 is further configured to receive second information sent by the first device, where the second information is sent by the first device when both a first check and a second check fail, the first check is a check performed on a second multicast frame, the second check is a check performed on a third multicast frame, the second multicast frame is obtained by the first device by performing bit descrambling on the bit-scrambled first multicast frame by using the first preset scrambling code, and the third multicast frame is obtained by the first device by performing bit descrambling on the bit-scrambled first multicast frame by using the second preset scrambling code.

FIG. 14 is a schematic diagram of a structure of a communication apparatus according to an embodiment of this application.

A communication apparatus 3000 includes a communication interface 3010 and a processor 3020.

The communication interface 3010 is configured to perform information exchange between the communication apparatus 3000 and another communication apparatus.

When program instructions are executed in the processor 3020, the processor 3020 is configured to perform the foregoing communication method performed by the sending node or the receiving node.

An embodiment of this application further provides a communication system, including a sending node and a receiving node.

According to an embodiment of this application, a computer program storage medium is further provided. The computer program storage medium has program instructions, and when the program instructions are executed, the foregoing method is performed.

According to an embodiment of this application, a chip system is further provided. The chip system includes at least one processor, and when program instructions are executed by the at least one processor, the foregoing method is performed.

It should be understood that, the processor in the embodiments of this application may be a central processing unit (central processing unit, CPU). The processor may be further another general-purpose processor, a digital signal processor (digital signal processor, DSP), an application-specific integrated circuit (application-specific integrated circuit, ASIC), a field programmable gate array (field programmable gate array, FPGA), or another programmable logic device, discrete gate or transistor logic device, discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through an example rather than a limitative description, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

All or some of the foregoing embodiments may be implemented by using software, hardware, firmware, or any combination thereof. When software is used to implement embodiments, the foregoing embodiments may be implemented completely or partially in a form of a computer program product. The computer program product includes one or more computer instructions or computer programs. When the program instructions or the computer programs are loaded and executed on the computer, the procedure or functions according to the embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, at least one means one or more, and a plurality of means two or more. "At least one of the following items (pieces)" or a similar expression thereof means any combination of these items, including a single item (piece) or any combination of a plurality of items (pieces). For example, at least one item (piece) of a, b, or c may represent: a, b, c, a and b, a and c, b and c, or a, b, and c, where a, b, and c may be singular or plural.

It should be understood that, in various embodiments of this application, sequence numbers of the foregoing processes do not mean execution sequences. The execution sequences of the processes should be determined according to functions and internal logic of the processes, and do not constitute any limitation on implementation processes of embodiments of this application.

A person of ordinary skill in the art may be aware that, in combination with the examples described in embodiments disclosed herein, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief descriptions, for a detailed working process of the foregoing system, apparatus, and unit, refer to a corresponding process in the foregoing method embodiments. Details are not described herein again.

In the several embodiments according to this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are only specific implementations of this application, but are not intended to limit the protection scope of this application. Therefore, the protection scope of this application shall be subject to the protection scope of the claims.

## Claims

1. A communication method, wherein the method comprises:
receiving (S320), by a first device through a multicast physical channel, a first multicast frame sent by a second device, wherein the first multicast frame comprises first information; and
**characterized in that** when
the first information indicates that the first multicast frame is the last multicast frame sent by the second device within a preset time period, stopping (S330), by the first device, receiving the multicast physical channel within the preset time period.

2. The method according to claim 1, wherein the first information is located in a physical layer frame header of the first multicast frame; and
the method further comprises: parsing, by a physical layer of the first device, the physical layer frame header of the first multicast frame, to determine the first information.

3. The method according to claim 1, wherein the first information is located in a payload header of a physical layer of the first multicast frame; and
the method further comprises: parsing, by a preset layer of the first device, the payload header, to determine the first information, wherein the preset layer is a higher layer relative to the physical layer.

4. The method according to any one of claims 1 to 3, wherein
the method further comprises: checking, by the first device, the first multicast frame; and
the stopping, by the first device, receiving the multicast physical channel within the preset time period comprises: when a result of the check indicates that the first multicast frame is correct, stopping, by the first device, receiving the multicast physical channel within the preset time period; or
the method further comprises: when a result of the check indicates that the first multicast frame is incorrect, sending, by the first device, retransmission indication information to the second device, wherein the retransmission indication information indicates the second device to resend the first multicast frame.

5. The method according to claim 4, wherein the first multicast frame comprises second information, and the second information indicates that a multicast frame is stored in a retransmission storage area of the second device.

6. The method according to any one of claims 1 to 5, wherein the first information is determined based on a storage status of a new transmission storage area after the second device reads a first data unit from the new transmission storage area and removes the first data unit from the new transmission storage area, and when no data unit is stored in the new transmission storage area from which the first data unit is removed, the first information indicates that the first multicast frame is the last multicast frame sent by the second device within the preset time period.

7. A communication method, wherein the method comprises:
generating (S310), by a second device, a first multicast frame, **characterized in that** the first multicast frame comprises first information, and the first information indicates whether the first multicast frame is the last multicast frame sent by the second device within a preset time period; and
sending (S320), by the second device, the first multicast frame to a plurality of first devices through a multicast physical channel.

8. A communication apparatus, comprising a module configured to perform the method according to any one of claims 1 to 7.

9. A communication system, comprising a first communication device and a second communication device, wherein the first communication device is configured to perform the method according to any one of claims 1 to 6, and the second communication device is configured to perform the method according to claim 7.

## Patentansprüche

1. Kommunikationsverfahren, wobei das Verfahren Folgendes umfasst:
Empfangen (S320), durch eine erste Einrichtung durch einen physischen Multicast-Kanal, eines ersten Multicast-Frames, der durch eine zweite Einrichtung gesendet wird, wobei der erste Multicast-Frame erste Informationen umfasst; und
**gekennzeichnet durch**, wenn die ersten Informationen angeben, dass der erste Multicast-Frame der letzte Multicast-Frame ist, der durch die zweite Einrichtung innerhalb eines voreingestellten Zeitraums gesendet wird, Stoppen (S330), durch die erste Einrichtung, des Empfangens des physischen Multicast-Kanals innerhalb des voreingestellten Zeitraums.

2. Verfahren nach Anspruch 1, wobei sich die ersten Informationen in einem Frame-Header einer physischen Schicht des ersten Multicast-Frames befinden; und
das Verfahren ferner Folgendes umfasst: Parsen, durch eine physische Schicht der ersten Einrichtung, des Frame-Headers der physischen Schicht des ersten Multicast-Frames, um die ersten Informationen zu bestimmen.

3. Verfahren nach Anspruch 1, wobei sich die ersten Informationen in einem Nutzlast-Header einer physischen Schicht des ersten Multicast-Frames befinden; und
das Verfahren ferner Folgendes umfasst: Parsen, durch eine voreingestellte Schicht der ersten Einrichtung, des Nutzlast-Headers, um die ersten Informationen zu bestimmen, wobei die voreingestellte Schicht relativ zu der physischen Schicht eine höhere Schicht ist.

4. Verfahren nach einem der Ansprüche 1 bis 3, wobei das Verfahren ferner Folgendes umfasst: Überprüfen, durch die erste Einrichtung, des ersten Multicast-Frames; und
das Beenden, durch die erste Einrichtung, des Empfangens des physischen Multicast-Kanals innerhalb des voreingestellten Zeitraums Folgendes umfasst: wenn ein Ergebnis der Überprüfung angibt, dass der erste Multicast-Frame korrekt ist, Stoppen, durch die erste Einrichtung, des Empfangens des physischen Multicast-Kanals innerhalb des voreingestellten Zeitraums; oder das Verfahren ferner Folgendes umfasst: wenn ein Ergebnis der Überprüfung angibt, dass der erste Multicast-Frame inkorrekt ist, Senden, durch die erste Einrichtung, von Wiederübertragungsangabeinformationen an die zweite Einrichtung, wobei die Wiederübertragungsangabeinformationen der zweiten Einrichtung angeben, dass der erste Multicast-Frame erneut zu senden ist.

5. Verfahren nach Anspruch 4, wobei der erste Multicast-Frame zweite Informationen umfasst und die zweiten Informationen angeben, dass in einem Wiederübertragungsspeicherbereich der zweiten Einrichtung ein Multicast-Frame gespeichert ist.

6. Verfahren nach einem der Ansprüche 1 bis 5, wobei die ersten Informationen basierend auf einem Speicherstatus eines neuen Übertragungsspeicherbereichs bestimmt werden, nachdem die zweite Einrichtung eine erste Dateneinheit aus dem neuen Übertragungsspeicherbereich liest und die erste Dateneinheit aus dem neuen Übertragungsspeicherbereich entfernt, und wenn in dem neuen Übertragungsspeicherbereich, aus dem die erste Dateneinheit entfernt wird, keine Dateneinheit gespeichert ist, die ersten Informationen angeben, dass der erste Multicast-Frame der letzte Multicast-Frame ist, der durch die zweite Einrichtung innerhalb des voreingestellten Zeitraums gesendet wird.

7. Kommunikationsverfahren, wobei das Verfahren Folgendes umfasst:
Generieren (S310), durch eine zweite Einrichtung, einen ersten Multicast-Frames, **dadurch gekennzeichnet, dass**
der erste Multicast-Frame erste Informationen umfasst und die ersten Informationen angeben, ob der erste Multicast-Frame der letzte Multicast-Frame ist, der durch die zweite Einrichtung innerhalb eines voreingestellten Zeitraums gesendet wird; und
Senden (S320), durch die zweite Einrichtung, des ersten Multicast-Frames an eine Vielzahl von ersten Einrichtungen durch einen physischen Multicast-Kanal.

8. Kommunikationsvorrichtung, umfassend ein Modul, das dazu konfiguriert ist, das Verfahren nach einem der Ansprüche 1 bis 7 durchzuführen.

9. Kommunikationssystem, umfassend eine erste Kommunikationseinrichtung und eine zweite Kommunikationseinrichtung, wobei die erste Kommunikationseinrichtung dazu konfiguriert ist, das Verfahren nach einem der Ansprüche 1 bis 6 durchzuführen, und die zweite Kommunikationseinrichtung dazu konfiguriert ist, das Verfahren nach Anspruch 7 durchzuführen.

## Revendications

1. Procédé de communication, dans lequel le procédé comprend :
la réception (S320), par un premier dispositif via un canal physique multicast, d'une première trame multicast envoyée par un second dispositif, dans lequel la première trame multicast comprend de premières informations ; et
**caractérisé en ce que** lorsque les premières informations indiquent que la première trame multicast est la dernière trame multicast envoyée par le second dispositif dans un délai prédéfini, l'arrêt (S330), par le premier dispositif, de la réception du canal physique multicast dans le délai prédéfini.

2. Procédé selon la revendication 1, dans lequel les premières informations sont situées dans un en-tête de trame de couche physique de la première trame multicast ; et
le procédé comprend en outre : l'analyse, par une couche physique du premier dispositif, de l'en-tête de trame de couche physique de la première trame multicast, pour déterminer les premières informations.

3. Procédé selon la revendication 1, dans lequel les premières informations sont situées dans un en-tête de charge utile d'une couche physique de la première trame multicast ; et
le procédé comprend en outre : l'analyse, par une couche prédéfinie du premier dispositif, de l'en-tête de charge utile, pour déterminer les premières informations, dans lequel la couche prédéfinie est une couche supérieure par rapport à la couche physique.

4. Procédé selon l'une quelconque des revendications 1 à 3, dans lequel
le procédé comprend en outre : la vérification, par le premier dispositif, de la première trame multicast ; et
l'arrêt, par le premier dispositif, de la réception du canal physique multicast dans le délai prédéfini comprend : lorsqu'un résultat de la vérification indique que la première trame multicast est correcte, l'arrêt, par le premier dispositif, de la réception du canal physique multicast dans le délai prédéfini ; ou
le procédé comprend en outre : lorsqu'un résultat de la vérification indique que la première trame multicast est incorrecte, l'envoi, par le premier dispositif, d'informations d'indication de retransmission au second dispositif, dans lequel les informations d'indication de retransmission indiquent au second dispositif de renvoyer la première trame multicast.

5. Procédé selon la revendication 4, dans lequel la première trame multicast comprend de secondes informations, et les secondes informations indiquent qu'une trame multicast est stockée dans une zone de stockage de retransmission du second dispositif.

6. Procédé selon l'une quelconque des revendications 1 à 5, dans lequel les premières informations sont déterminées sur la base d'un état de stockage d'une nouvelle zone de stockage de transmission après que le second dispositif lit une première unité de données à partir de la nouvelle zone de stockage de transmission et supprime la première unité de données de la nouvelle zone de stockage de transmission, et lorsque aucune unité de données n'est stockée dans la nouvelle zone de stockage de transmission à partir de laquelle la première unité de données est supprimée, les premières informations indiquent que la première trame multicast est la dernière trame multicast envoyée par le second dispositif au cours du délai prédéfini.

7. Procédé de communication, dans lequel le procédé comprend :
la génération (S310), par un second dispositif, d'une première trame multicast, **caractérisée en ce que**
la première trame multicast comprend de premières informations, et les premières informations indiquent si la première trame multicast est la dernière trame multicast envoyée par le second dispositif dans un délai prédéfini ; et
l'envoi (S320), par le second dispositif, de la première trame multicast à une pluralité de premiers dispositifs via un canal physique multicast.

8. Appareil de communication, comprenant un module configuré pour réaliser le procédé selon l'une quelconque des revendications 1 à 7.

9. Système de communication, comprenant un premier dispositif de communication et un second dispositif de communication, dans lequel le premier dispositif de communication est configuré pour réaliser le procédé selon l'une quelconque des revendications 1 à 6 et le second dispositif de communication est configuré pour réaliser le procédé selon la revendication 7.
